# EUROPEAN PATENT APPLICATION

(11) **EP 2 154 512 A1**
(43) Date of publication of application: **17.02.2010**
(21) Application number: 08752063.1
(22) Date of filing: 24.04.2008
(51) Int. Cl.: G01N 21/01, G01N 21/77

(54) **AUTOMATED ANALYZER**

(30) Priority: 09.05.2007 JP 2007124681
(71) Applicant: Beckman Coulter, Inc., Fullerton, CA 92834 (US)
(72) Inventor: OGAWA, Yuji, Shizuoka-ken, 411-0931 (JP)
(74) Representative: Müller-Boré & Partner Patentanwälte
(86) International application number: PCT/JP2008/057972
(87) International publication number: WO 2008/139886

(57) **Abstract**

To provide an automatic analyzer that includes a light source device capable of obtaining a light having a desired wavelength even with use of LEDs as light sources. An automatic analyzer that measures optical characteristics of liquid contained in a vessel includes a light source device (12) having plural light sources (12a, 12b) that emit respective lights of different peak wavelengths, in which a wavelength range of one of the light emitted contains the peak wavelength of the other light emitted from the other light source, and a lens (12c) or a half mirror that mixes the light emitted from the light sources. The light source device (12) outputs a light having a desired mixed peak wavelength that is different from the peak wavelengths.

## Description

### TECHNICAL FIELD

The present invention relates to an automatic analyzer.

### BACKGROUND ART

Conventionally, automatic analyzers measure absorbance of reaction liquid, which is resulted from a reaction between a specimen and a reagent, with a plurality of lights that have different wavelengths to analyze constituent concentration or the like of the specimen. An automatic analyzer that uses an LED as a light source for measuring the absorbance is proposed (see Patent Document 1, for example).

Patent Document 1: Japanese Patent Application Laid-open No. H8-122247

### DISCLOSURE OF INVENTION

### PROBLEM TO BE SOLVED BY THE INVENTION

Incidentally, a light emitted from an LED has an emission spectrum with peak wavelengths at specific wavelengths, which are discrete. Therefore, lights with usable peak wavelengths are limited in LEDs. Thus, there is a problem that obtaining a light that has a peak wavelength at a desired wavelength is difficult.

The present invention has been made in view of the above, and an object of the present invention is to provide an automatic analyzer that has a light source device capable of emitting a light with a desired peak wavelength using light sources that emit plural lights of different peak wavelengths.

### MEANS FOR SOLVING PROBLEM

To solve the problem described above and achieve the object, an automatic analyzer according to the present invention includes a light source device including a plurality of light sources that emit respective lights of different peak wavelengths, in which a wavelength range of one of the light emitted contains the peak wavelength of the other light emitted from the other light source; and a mixing unit that mixes the respective lights emitted from the light sources, wherein the light source device outputs a light having a desired mixed peak wavelength that is different from the peak wavelengths.

In the automatic analyzer according to the present invention as set forth in the invention described above, the mixing unit is a lens or a half mirror.

In the automatic analyzer according to the present invention as set forth in the invention described above, the half mirror aligns optical axes to mix the lights emitted from the light sources.

In the automatic analyzer according to the present invention as set forth in the invention described above, the light source device further includes an adjusting unit that adjusts a radiation intensity of the light emitted from at least one of the light sources.

In the automatic analyzer according to the present invention as set forth in the invention described above, the light source device further includes a monitoring unit that monitors the mixed peak wavelength and a radiation intensity, and the adjusting unit adjusts the radiation intensity of the light emitted from at least one of the light sources based on the mixed peak wavelength and the radiation intensity monitored by the monitoring unit.

### EFFECT OF THE INVENTION

The automatic analyzer according to the present invention includes a light source device having a plurality of light sources that emit respective lights of different peak wavelengths, in which a wavelength range of one of the light emitted contains the peak wavelength of the other light emitted from the other light source, and a mixing unit that mixes the lights emitted from the respective light sources, so as to output a light having a desired mixed peak wavelength that is different from the peak wavelengths. Therefore, it is possible to emit, using the light sources emitting the plural lights of the different peak wavelengths, the light that has the desired mixed peak wavelength between the different peak wavelengths.

### BRIEF DESCRIPTION OF DRAWINGS

FIG. 1 is a schematic configuration diagram showing an automatic analyzer according to a first embodiment of the present invention.
FIG. 2 is a schematic diagram showing a configuration of a light source device included in the automatic analyzer according to the first embodiment and explaining mixing of a light having a first peak wavelength and a light having a second peak wavelength.
FIG. 3 illustrates spectral distributions of the light having the first peak wavelength, the light having the second peak wavelength, and a mixed light.
FIG. 4 is a schematic diagram showing a configuration of a light source device included in an automatic analyzer according to a second embodiment of the present invention and explaining mixing of a light having a first peak wavelength and a light having a second peak wavelength.
FIG. 5 illustrates spectral distributions of the light having the first peak wavelength, the light having the second peak wavelength, and a mixed light.
FIG. 6 illustrates a spectral distribution of the mixed light when a radiation intensity of the light having the second peak wavelength is larger than a radiation intensity of the light having the first peak wavelength, which are shown in FIG. 5.
FIG. 7 is a schematic diagram showing a configuration of a light source device included in an automatic analyzer according to a third embodiment of the present invention and explaining mixing of a light having a first peak wavelength and a light having a second peak wavelength.

### EXPLANATIONS OF LETTERS OR NUMERALS

- 1: Automatic analyzer
- 2, 3: Reagent table
- 4: Cuvette wheel
- 5: Reaction vessel
- 6, 7: Reagent dispensing system
- 8: Specimen vessel transfer system
- 9: Feeder
- 10: Rack
- 11: Specimen dispensing system
- 12: Light source device
- 12a, 12b: LED
- 12c: Lens
- 13: Light-receiving element
- 14: Cleaning system
- 15: Stirrer
- 17: Control unit
- 18: Input unit
- 19: Display unit
- 22: Light source device
- 22a, 22c: LED
- 22b, 22d: Variable resistance
- 23: Half mirror
- 24: Intensity control unit
- 32: Light source device
- 32a, 32c: LED
- 32b, 32d: Lens
- 33: Half mirror
- 34: Intensity control unit
- 35: Microcomputer
- 36: D/A converting circuit
- 37: Half mirror
- 38: Photometric element

### BEST MODE(S) FOR CARRYING OUT THE INVENTION

### (First embodiment)

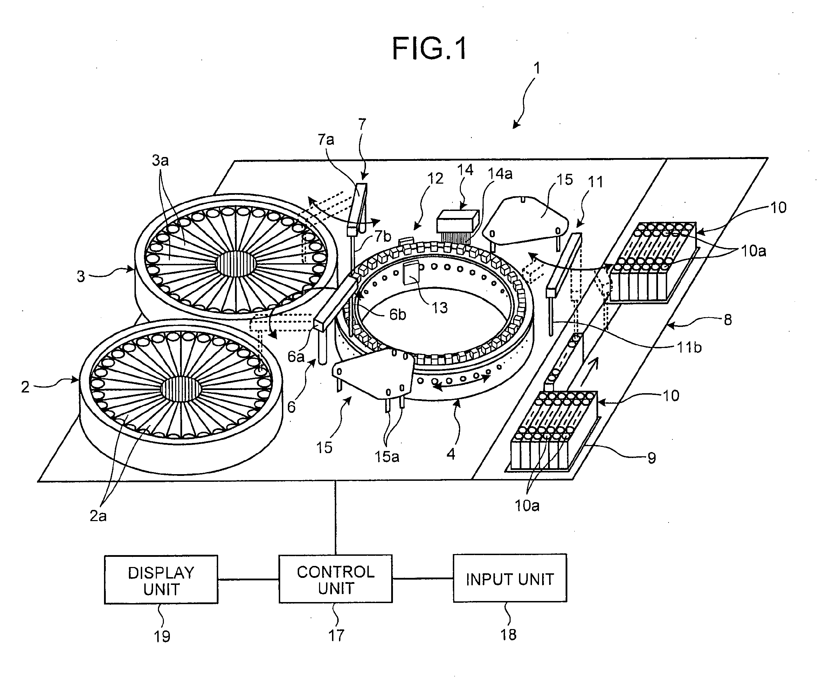

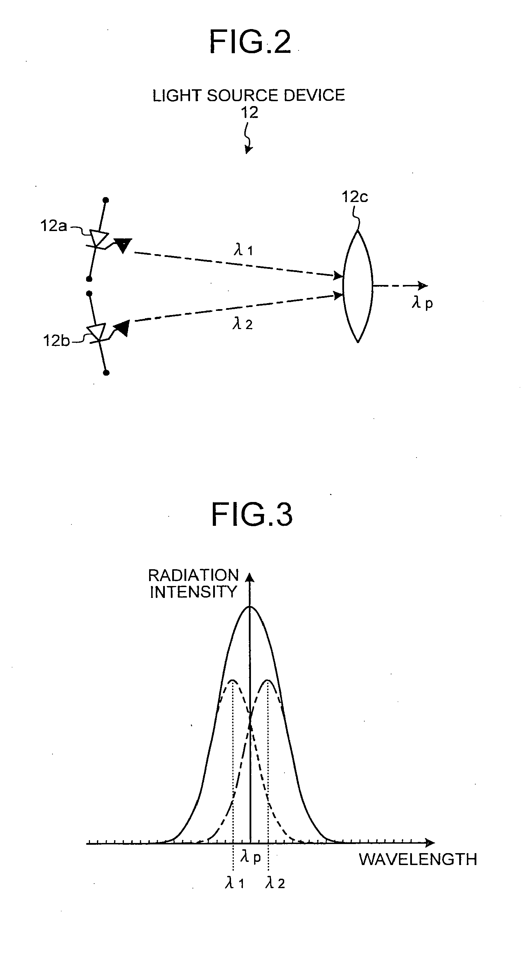

An automatic analyzer according to a first embodiment of the present invention will be described in detail below with reference to the accompanying drawings. FIG. 1 is a schematic configuration diagram showing the automatic analyzer according to the first embodiment. FIG. 2 is a schematic diagram showing a configuration of a light source device included in the automatic analyzer according to the first embodiment and explaining mixing of a light having a first peak wavelength and a light having a second peak wavelength.

An automatic analyzer 1 includes, as shown in FIG. 1, reagent tables 2 and 3, a cuvette wheel 4, a specimen vessel transfer system 8, a light source device 12, a cleaning system 14, stirrers 15, and a control unit 17.

The reagent tables 2 and 3 include, as shown in FIG. 1, a plurality of reagent vessels 2a containing a first reagent and a plurality of reagent vessels 3a containing a second reagent arranged in circumferential directions, respectively. The reagent tables 2 and 3 are driven to rotate by a driving unit to convey the reagent vessels 2a and 3a in the circumferential directions, respectively. Each of the reagent vessels 2a and 3a is filled with a predetermined reagent corresponding to an analytical item. An identification code label (not shown) is attached to an outer surface of each of the reagent vessels 2a and 3a for displaying information such as a type of the contained reagent, a lot, and an expiration date. A reader that reads reagent information recorded on the identification code label attached to each of the reagent vessels 2a and 3a and outputs the read reagent information to the control unit 17 is disposed on a circumference of each of the reagent tables 2 and 3.

The cuvette wheel 4 includes a holding unit that holds reaction vessels 5 and optical paths formed of circular openings for guiding light emitted from the light source device 12 to a light-receiving element 13. The cuvette wheel 4 is, as shown in FIG. 1, equipped with a plurality of the reaction vessels 5 along a circumferential direction thereof, and is driven to rotate intermittently in a direction indicated by an arrow to move the reaction vessels 5 in the circumferential direction. The cuvette wheel 4 rotates 360 degrees plus an angle occupied by one reaction vessel or 360 degrees minus an angle occupied by one reaction vessel by being intermittently rotated four times.

The reaction vessels 5 are rectangular cylindrical vessels called cuvettes that are made of optically-transparent material that transmits not less than 80% of an analysis light (340 nanometers (nm) to 800 nm) emitted from the light source device 12. Examples of the material include glass including heat-resistant glass, cyclic olefin, and polystyrene. Reagent dispensing systems 6 and 7 located near the reaction vessels 5 dispense reagents from the reagent vessels 2a on the reagent table 2 and the reagent vessels 3a on the reagent table 3, respectively, to each of the reaction vessels 5. The reagent dispensing systems 6 and 7 include arms 6a and 7a that are rotatable in directions indicated by respective arrows in horizontal planes and that are equipped with probes 6b and 7b that dispense reagents, and cleaning units that clean the probes 6b and 7b with cleaning water, respectively.

The specimen vessel transfer system 8 transfers, as shown in FIG. 1, a plurality of racks 10 arranged on a feeder 9, one by one and in a stepping manner in a direction indicated by an arrow. Each of the racks 10 includes a plurality of specimen vessels 10a each containing a specimen. Each time a stepping movement of the racks 10 that are transferred by the specimen vessel transfer system 8 stops, a specimen dispensing system 11, which is equipped with an arm 11a that is rotatable in a horizontal direction and a probe 11b, dispenses the specimens contained in the specimen vessel 10a into the reaction vessel 5. The specimen dispensing system 11 includes a cleaning unit that cleans the probe 11b.

The light source device 12 irradiates a liquid sample resulted from a reaction between the reagent and the specimen in each of the reaction vessels 5 with the analysis light (340 nm to 800 nm). As shown in FIG. 2, the light source device 12 includes LEDs 12a and 12b, and a lens 12c. As shown in Fig. 3, the LED 12a has an emission spectrum with a peak wavelength λ1, and the LED 12b has an emission spectrum with a peak wavelength λ2 (>λ1) that is within a wavelength range of the light emitted from the LED 12a. The lens 12c mixes the light emitted from the LED 12a and the light emitted from the LED 12b, and emits a light having a mixed peak wavelength λp (λ1<λp<λ2) that is different from both of the wavelengths λ1 and λ2 as shown in FIG. 3. The light having the mixed peak wavelength λp, which is emitted from the lens 12c, passes through the liquid sample, such as the specimen and the reagent, contained in each of the reaction vessels 5 on the cuvette wheel 4, and enters the light-receiving element 13.

The light-receiving element 13 is arranged to face the light source device 12 across the reaction vessels 5 arranged on the cuvette wheel 4, and receives the light having the mixed peak wavelength λp, which has passed through the liquid sample in each of the reaction vessels 5. The light-receiving element 13 then outputs an optical signal corresponding to the quantity of the received light to the control unit 17. Examples of the light-receiving element 13 include a photodiode.

The cleaning system 14 sucks the liquid sample in each of the reaction vessels 5 through a nozzle 14a to discharge the liquid specimen. Then, the cleaning system 14 repeatedly dispenses cleaning fluid such as detergent or cleaning water into each of the reaction vessels 5 and sucks the cleaning fluid out through the nozzle 14a to clean each of the reaction vessels 5 after completion of photometry by the light source device 12 and the light-receiving element 13.

Two stirrers 15 are located on the circumference of the cuvette wheel 4 such that they diametrically face each other. Each of the stirrers 15 stirs the specimen and the reagent dispensed in each of the reaction vessels 5 with a stir bar 15a, so that the specimen and the reagent react with each other.

As the control unit 17, a microcomputer (hereinafter, referred to as "a microcomputer") having a calculation function, a storage function, a control function, a timer function, and the like is used, for example. The control unit 17 is connected with the reagent tables 2 and 3, the cuvette wheel 4, the reagent dispensing systems 6 and 7, the specimen vessel transfer system 8, the specimen dispensing system 11, the light source device 12, the cleaning system 14, the stirrers 15, an input unit 18, and a display unit 19, and controls operation of each of these units. The control unit 17 obtains absorbance of the light having the wavelength λp based on the quantity of light emitted from the LED 12a, the quantity of light emitted from the LED 12b, and the optical signal that is input from the light-receiving element 13 and indicates the quantity of the received light, in order to analyze the constituent concentration or the like of a specimen. The control unit 17 controls the automatic analyzer 1 to stop the analysis operation or alerts an operator of the automatic analyzer 1 when the lot of a reagent is wrong or an expiration date has passed, based on information read from the information recorded in the identification code label attached to each of the reagent vessels 2a and 3a.

The input unit 18 is used for inputting analytical items, measurement items of a specimen, and the like to the control unit 17. Examples of the input unit 18 include a keyboard and a mouse. The display unit 19 displays analysis contents, analysis results, warning information, and the like. Examples of the display unit 19 include a display panel.

In the automatic analyzer 1 having the above configuration, the reagent dispensing system 6 sequentially dispenses the first reagents from the reagent vessels 2a to the reaction vessels 5 that are conveyed in the circumferential direction of the cuvette wheel 4 with the intermittent rotation of the cuvette wheel 4. After the first reagent is dispensed to each of the reaction vessels 5, the specimen dispensing system 11 sequentially dispenses specimens from the specimen vessels 10a held by the racks 10 to the reaction vessels 5. After the specimen is dispensed to each of the reaction vessels 5, one of the stirrers 15 stirs the first reagents and the specimens in the reaction vessels 5 every time the intermittent rotation of the cuvette wheel 4 stops, so that the first reagents react with the specimens. After the first reagents and the specimens are stirred, the reagent dispensing system 7 sequentially dispenses the second reagents from the reagent vessels 3a to the reaction vessels 5. Then, the stirrer 15 stirs the second reagents and the specimens in the reaction vessels 5 every time the intermittent rotation of the cuvette wheel 4 stops so as to promote the reaction.

Then, in the light source device 12, the lens 12c mixes the light emitted from the LED 12a and the light emitted from the LED 12b with each other in order to output the light having the mixed peak wavelength λp that is different from both of the peak wavelengths λ1 and λ2. Thus, the light source device 12 can emit the light having the desired mixed peak wavelength λp that is different from the peak wavelengths λ1 and λ2 even though it uses the LED 12a that emits the light having the peak wavelength λ1 and the LED 12b that emits the light having the peak wavelength λ2 as light sources. Therefore, the automatic analyzer 1 including the light source device 12 can measure optical characteristics of a liquid sample such as a specimen and a reagent with the light having the desired mixed peak wavelength λp.

It may be possible to emit a light having the desired mixed peak wavelength λp that is different from the peak wavelengths λ1 and λ2 by using, for example, an interference filter. However, the light obtained by this means has a lower radiation intensity than those of original light having the peak wavelength λ1 and original light having the peak wavelength λ2. In contrast, the light source device 12 mixes the light having the peak wavelength λ1, which is emitted from the LED 12a, and the light having the peak wavelength λ2, which is emitted from the LED 12b, so that a radiation intensity of the light having the mixed peak wavelength λp is not lowered compared to the respective lights emitted from the LEDs 12a and 12b that are components of the light with the wavelength λp. Therefore, the light source device 12 can improve energy efficiency.

### (Second embodiment)

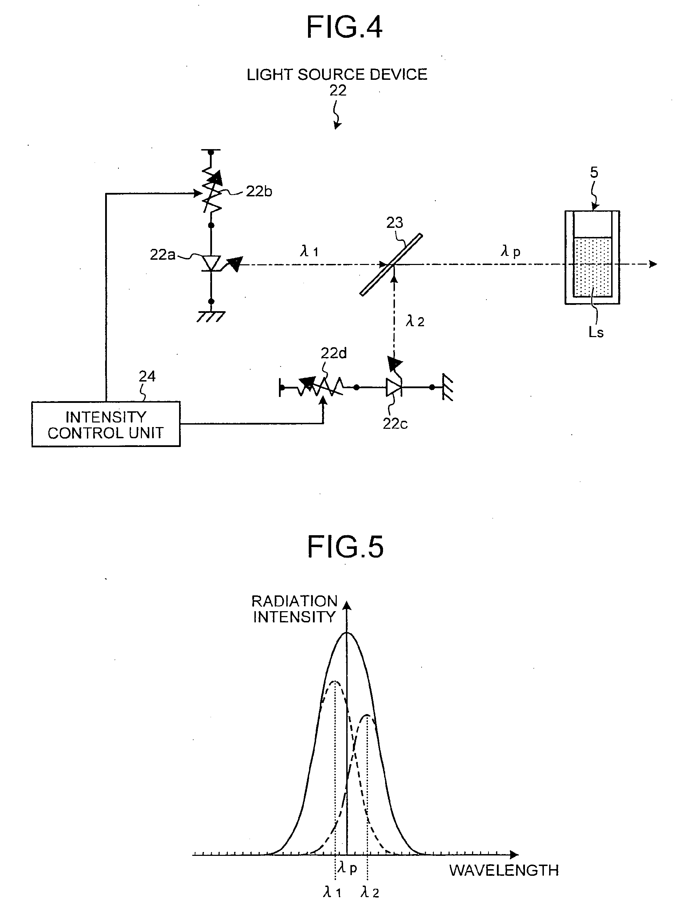

An automatic analyzer according to a second embodiment of the present invention will be described in detail below with reference to the accompanying drawings. While the automatic analyzer of the first embodiment mixes lights emitted from two LEDs of the light source device, the automatic analyzer of the second embodiment emits a light having a desired mixed peak wavelength by adjusting radiation intensities of lights emitted from two LEDs of a light source device. FIG. 4 is a schematic diagram showing a configuration of a light source device included in the automatic analyzer according to the second embodiment and explaining mixing of a light having a first peak wavelength and a light having a second peak wavelength. The automatic analyzers of the second and later embodiments have the same configurations as that of the automatic analyzer of the first embodiment, and the same components are denoted with the same reference numerals in the following descriptions.

A light source device 22 included in the automatic analyzer 1 of the second embodiment includes, as shown in FIG. 4, LEDs 22a and 22c, variable resistances 22b and 22d, a half mirror 23, and an intensity control unit 24. As shown in FIG. 5, the LED 22a has an emission spectrum with a peak wavelength λ1, and the LED 22c has an emission spectrum with a peak wavelength λ2 (>λ1) that is within a wavelength range of the light emitted from the LED 22a. Each of the variable resistances 22b and 22d functions as an adjusting unit that adjusts a radiation intensity of light emitted from corresponding one of the LEDs 22a and 22c.

As shown in FIG. 4, the half mirror 23 mixes the light emitted from the LED 22a and the light emitted from the LED 22c, and emits a light having a mixed peak wavelength λp (λ1<λp<λ2) that is different from both of the wavelengths λ1 and λ2 (see FIG. 5) towards a liquid specimen Ls contained in each of the reaction vessels 5. The light that has passed through the liquid specimen Ls enters the light-receiving element 13. The intensity control unit 24 individually controls the radiation intensity of the light emitted from the LED 22a by changing a resistance value of the variable resistance 22b and the light emitted from the LED 22c by changing a resistance value of the variable resistance 22d. Examples of the intensity control unit 24 include a microcomputer.

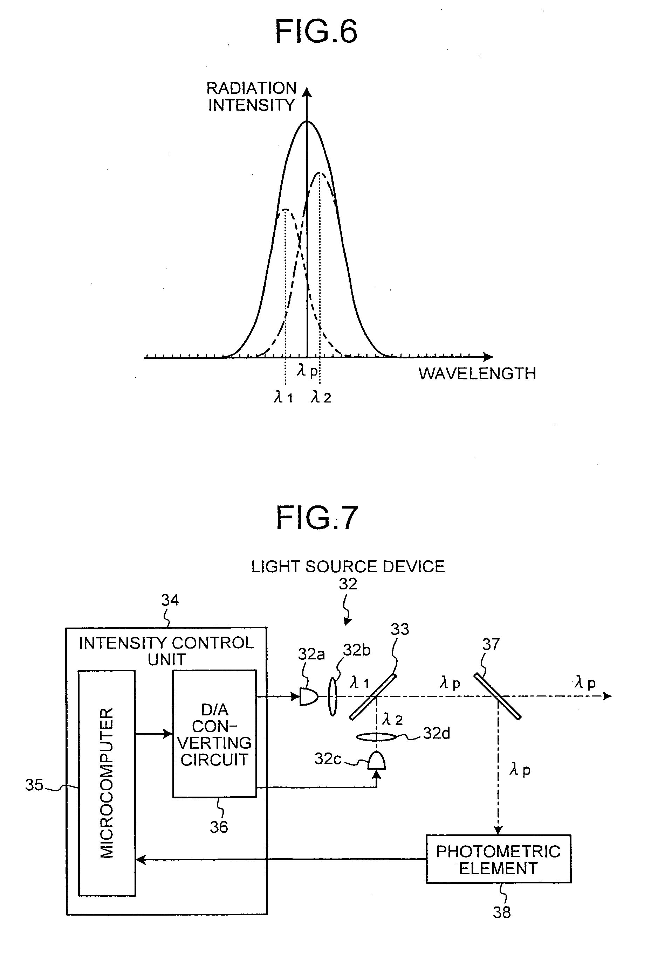

As described above, in the light source device 22, the intensity control unit 24 controls the radiation intensity of the light emitted from the LED 22a via the variable resistance 22b and the radiation intensity of the light emitted from the LED 22c via the variable resistance 22d. Therefore, as shown in FIG. 5, when the intensity control unit 24 increases the radiation intensity of the light emitted from the LED 22a relative to the radiation intensity of the light emitted from the LED 22c, the mixed peak wavelength λp approaches the peak wavelength λ1 of the light emitted from the LED 22a. Conversely, as shown in FIG. 6, when the intensity control unit 24 increases the radiation intensity of the light emitted from the LED 22c relative to the radiation intensity of the light emitted from the LED 22a, the mixed peak wavelength λp approaches the peak wavelength λ2 of the light emitted from the LED 22c. The light source device 22 is also allowed to mix the light emitted from the LED 22a and the light emitted from the LED 22c by using the half mirror 23 without controlling the radiation intensity of each light. Furthermore, the light source device 22 is allowed to control the radiation intensity of the light emitted from either one of the LEDs 22a and 22c.

Thus, the automatic analyzer of the second embodiment can obtain the light having the desired peak wavelength between the peak wavelengths λ1 and λ2 even when the light source device 22 uses the LEDs 22a and 22c as light sources. Furthermore, because the light source device 22 can obtain the light having any desired peak wavelength that is between the peak wavelengths λ1 and λ2 through light mixing, a wavelength range of the mixed light can be increased compared to that obtained by the light source device 12. As a result, usability is improved.

It is possible to emit a light having a mixed peak wavelength λp, which is different from both of the light having the peak wavelength λ1 and the light having the peak wavelength λ2, by using an interference filter or the like. However, with this method, an obtained peak wavelength may not completely coincide with the desired peak wavelength λp, which means the obtained peak wavelength is unstable. In contrast, the light source device 22 is configured such that the intensity control unit 24 controls both the radiation intensities of the lights respectively emitted from the LEDs 22a and 22c via the variable resistances 22b and 22d so as to obtain the light having the mixed wavelength λp that is between the peak wavelengths λ1 and λ2.

### (Third embodiment)

An automatic analyzer according to a third embodiment of the present invention will be described in detail below with reference to the accompanying drawings. While the automatic analyzer of the first embodiment mixes lights emitted from two LEDs of the light source device, the automatic analyzer of the third embodiment controls radiation intensities of lights emitted from two LEDs of a light source device by using an output from a D/A converting circuit as a source voltage. FIG. 7 is a schematic diagram showing a configuration of a light source device included in the automatic analyzer according to the third embodiment and explaining mixing of a light having a first peak wavelength and a light having a second peak wavelength.

A light source device 32 included in the automatic analyzer 1 of the third embodiment includes, as shown in FIG. 7, LEDs 32a and 32c, lenses 32b and 32d, a half mirror 33, an intensity control unit 34, a half mirror 37, and a photometric element 38. The LED 32a has an emission spectrum with a peak wavelength λ1, and the LED 32c has an emission wavelength with a peak wavelength λ2 (>λ1) that is within a wavelength range of the light emitted from the LED 32a. The lenses 32b and 32d condense the lights emitted from the LEDs 32a and 32c, respectively.

As shown in FIG. 7, the half mirror 33 mixes the light emitted from the LED 32a and the light emitted from the LED 32c, and emits a light having a mixed peak wavelength λp (λ1<λp<λ2) that is different from both of the wavelengths λ1 and λ2. The intensity control unit 34 includes a microcomputer 35 and a D/A converting circuit 36. The microcomputer 35 individually controls radiation intensities of the lights respectively emitted from the LEDs 32a and 32c via the D/A converting circuit 36 based on a measurement signal that is input from the photometric element 38. The D/A converting circuit 36 controls, under the control of the microcomputer 35, the radiation intensity of the light emitted from the LED 32a by a voltage output to the LED 32a and the radiation intensity of the light emitted from the LED32c by a voltage output to the LED 32c.

The half mirror 37 and the photometric element 38 function as a monitoring unit that monitors the light having the mixed peak wavelength λp obtained through light mixing by the half mirror 33. The half mirror 37 guides half of the light having the mixed peak wavelength λp to enter a liquid specimen contained in the reaction vessels 5, and reflects the other half of the light to guide it to enter the photometric element 38. The photometric element 38 measures a mixed peak wavelength from spectrum components of the light that has entered to the photometric element 38 and a radiation intensity of the light having the mixed peak wavelength, and outputs the measurement signal to the microcomputer 35.

As described above, the automatic analyzer of the third embodiment can obtain a light having a desired mixed peak wavelength even though the light source device 32 uses the LEDs 32a and 32c as light sources. Furthermore, the light source device 32 can emit the light having the desired peak wavelength between the peak wavelengths λ1 and λ2 through light mixing. Therefore, a wavelength range of a light to be emitted can be increased compared to that obtained by the light source device 12. As a result, usability is improved.

While the above embodiments are described with the example in which lights emitted from two different light sources and having different peak wavelengths are mixed with each other to output a light having a mixed peak wavelength that is different from the two peak wavelengths, it is possible to employ three or more light sources each emitting light having a different peak wavelength. Furthermore, a mixing unit can be a beam splitter, instead of the lens and the half mirror, to mix the light emitted from two different light sources and having different peak wavelengths.

Furthermore, while it is described that the automatic analyzer 1 includes two reagent tables for use of two types of reagents, it is possible to employ a single reagent table. In this case, it is possible to mount reagent vessels for the first reagent and reagent vessels for the second reagent together on the single reagent table. It is also possible to mount reagent vessels for only one type of a reagent on the single reagent table.

### INDUSTRIAL APPLICABILITY

As described above, the automatic analyzer according to the present invention includes the light source device capable of emitting a light having a desired peak wavelength using a plurality of light sources each emits a light having a peak wavelength different from that of the other. Therefore, the automatic analyzer can emit a light having a peak wavelength that is most suitable for a measurement item. As a result, the automatic analyzer can perform measurement accurately.

## Claims

1. An automatic analyzer that measures optical characteristics of liquid contained in a vessel, the automatic analyzer comprising:
a light source device including
a plurality of light sources that emit respective lights of different peak wavelengths, in which a wavelength range of one of the light emitted contains the peak wavelength of the other light emitted from the other light source; and
a mixing unit that mixes the respective lights emitted from the light sources,
wherein the light source device outputs a light having a desired mixed peak wavelength that is different from the peak wavelengths.

2. The automatic analyzer according to claim 1, wherein the mixing unit is a lens or a half mirror.

3. The automatic analyzer according to claim 2, wherein the half mirror aligns optical axes to mix the lights emitted from the light sources.

4. The automatic analyzer according to claim 1, wherein the light source device further includes an adjusting unit that adjusts a radiation intensity of the light emitted from at least one of the light sources.

5. The automatic analyzer according to claim 4, wherein the light source device further includes a monitoring unit that monitors the mixed peak wavelength and a radiation intensity, and
the adjusting unit adjusts the radiation intensity of the light emitted from at least one of the light sources based on the mixed peak wavelength and the radiation intensity monitored by the monitoring unit.
